# EUROPEAN PATENT SPECIFICATION

(11) **EP 1 604 735 B1**
(45) Date of publication and mention of the grant of the patent: **19.04.2017**
(21) Application number: 05253280.1
(22) Date of filing: 27.05.2005
(51) Int. Cl.: B01J 19/00

(54) **HERMETIC PORTING ASSEMBLIES AND METHODS OF MAKING THEM**
HERMETISCHE ÜBERTRAGUNGSVORRICHTUNG UND DEREN HERSTELLUNGSVERFAHREN
DISPOSITIF HERMÉTIQUE DE TRANSFERT ET SA MÉTHODE FABRICATION

(30) Priority: 10.06.2004 EP 04291453
(43) Date of publication of application: 14.12.2005
(73) Proprietor: Corning Incorporated, Corning, NY 14831 (US)
(72) Inventor: Dannoux, Thierry Luc Alain, 77210 Avon (FR); Marques, Paulo, 77300 Fontainebleau (FR)
(74) Representative: Greene, Simon Kenneth

(56) References cited:
- WO-A-03/039736
- US-A- 5 890 745
- US-B1- 6 273 478

## Description

### BACKGROUND OF THE INVENTION

### FIELD OF THE INVENTION

The present invention relates generally to hermetic porting assemblies, especially (but not exclusively) for use as components of reactors for micro process engineering, and to methods of making them. It is particularly concerned with assemblies incorporating glass-to-metal compression seals, as distinct from seals reliant on close matching of coefficients of thermal expansion.

### TECHNICAL BACKGROUND

Recently, activities in the field of thermal and chemical process engineering involving micro structured components have rapidly increased. Compared to conventional macroscopic reactors, internal dimensions of the channels of the micro reactors, microfluidic systems, microcircuits or other types of microstructures are in the millimeter to micrometer range. A high surface-to-volume ratio is desired to increase the mass and heat transfer rates for micro processing within such microstructures. Thermal exchange is the key feature in most chemical synthesis. An accurate and safe local heat management allows chemical processing at higher concentration, pressure and temperature, leading most of the time to better yields and higher efficiency. Thus the micro channels allow chemical processing with better thermal control than that obtainable from large batch reaction.

Materials used in micro process engineering are metals, silicon, and certain polymers. However, these materials are not suitable for chemical reactions at high temperature and/or with corrosive reactants. In this case, ceramic or glass materials are more useful due to their high thermal and chemical stability. Thus, there is an advantage in building microcircuits in glass, for chemical resistance.

Glass micro reactors can withstand both high temperature (> 400°C) and high pressure (> 15 bars) conditions. Nevertheless, chemical reactants (liquid or gas) have to be introduced into the micro reactor and flow through the glass channels under pressure and temperature. But at high temperature, the connection of the glass to an outside system metal network connector is a difficult problem to solve, because of different thermal expansion coefficient, thermal shocks, and other environmental and mechanical challenges. Therefore, suitable heat-resistant and gas tight inlet and outlet systems are required that are compatible with glass micro reactors.

Often, hermeticity on inlets and outlets of most devices, such as gas tanks, is obtained by pressing a joint (O-ring) onto a solid substrate at a high temperature. However, soft polymer joints (Viton®, chelraz®, etc...) cannot withstand temperatures higher than 250°C without a cooling system. Meanwhile, graphite joints require too much pressure to provide sufficient gas tightness, which often leads to mechanical damages to the device at the conditions required for micro reactors.

Therefore, there is a need for a simple, low-cost, and manufacturable gastight connection for glass micro reactors running under high temperature (> 400°C) and high pressure (> 15 bars). It is further desired that such a gastight, high thermal and chemical resistant connection for micro reactors can be easily connected and disconnected with standard commercial metal fittings.

WO 03/039736 discloses a fluidic module assembly comprising one or more conical connecting elements between module, the elements being made of the same material as the fluid processing modules i.e. metal, glass, ceramic, semiconductor material, or plastic. The elements are press-fit into connection openings in the top and/or bottom of the respective fluid processing modules. A coating of a metal softer than the material of the connection elements and fluid modules may be used to promote sealing.

US 6 273 478 discloses a detachable tube sealed to a microfluidic device by pressing the tube into a molded elastomeric seal, where the tube is held, in part by the deformation of the seal by a annular portion of the tube, which portion has an increased diameter relative to the adjacent outer surfaces of the tube.

US 5 890 745 discloses a method for producing a microfluidic coupler by etching a precise hole in the surface of a silicon wafer in which to receive the outer diameter of a capillary tube. The etching is performed by deep reactive ion etching (DRIE). The tube is either glued in place in the receiving hole, or the tube is of a high-CTE material, like certain polymers, and the tube is chilled to about -200° C, then expanded by returning to room temperature after insertion in the precision-etched hole.

### SUMMARY OF THE INVENTION

One aspect of the invention is a method and assembly of a hermetic porting assembly for a glass or glass ceramic reactor according to claim 1.

In another aspect, the present invention includes heating the metallic connector member and the glass member to the softening temperature of the glass member for the softened portion of the glass member to conform to the geometry of the metallic member.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification, but are not drawn to scale. The drawings illustrate various embodiments of the invention and together with the description serve to explain the principles and operations of the invention.

### BRIEF DESCRIPTION OF THE DRAWINGS

FIG. 1 is a perspective view of the hermetic porting assembly 10 of the present invention;
FIG. 2 is a cross-sectional view of the assembly process for the hermetic porting assembly 10 of the present invention;
FIGS. 3-4 are cross-sectional views of the assembly process for a first embodiment of the glass member 13 of the hermetic porting assembly 10 of FIGS. 1-2, in accordance with the present invention; and
FIG. 5 is a cross-sectional view of the assembly process for a second embodiment of the glass member 13 of the hermetic porting assembly 10 of FIGS. 1-2, in accordance with the present invention.

### DETAILED DESCRIPTION OF THE PREFERRED EMBODIMENTS

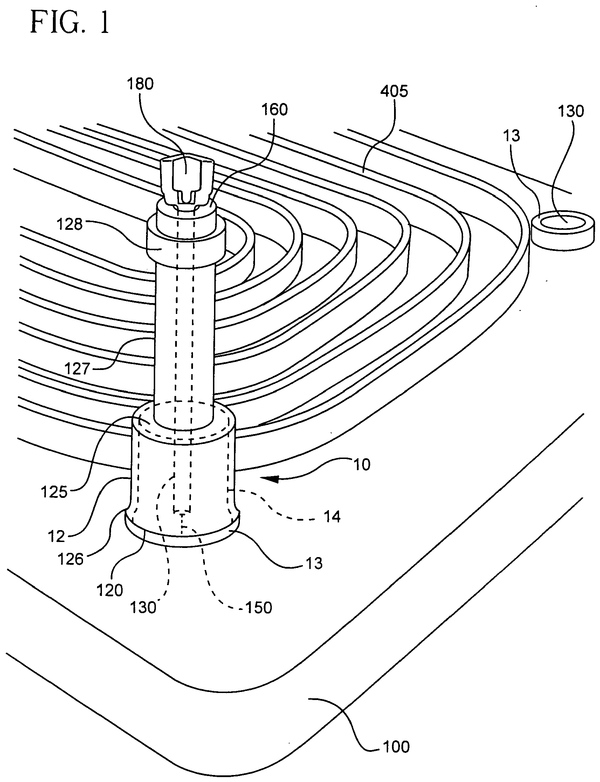

Reference will now be made in detail to the present preferred embodiments of the invention, examples of which are illustrated in the accompanying drawings. Whenever possible, the same reference numerals will be used throughout the drawings to refer to the same or like parts having the same functions, but are not necessarily drawn to scale. One embodiment of the hermetic porting assembly for a glass or glass ceramic reactor of the present invention is shown in FIG. 1, and is designated generally throughout by the reference numeral 10.

Referring to FIG. 1, a method and assembly of a hermetic porting assembly 10 for a glass or glass ceramic reactor 100 includes a metallic connector member 12 having a metal aperture 120, and a glass member 13 having a glass aperture 130. The glass member 13 is positioned within the metal aperture 120, wherein the metallic connector member 12 has a higher coefficient of thermal expansion than the glass member 13 and wherein at least a portion of the glass member 13 is held within the metallic aperture of the metallic member by a fused glass-to-metal hermetic compression seal 14.

In accordance with the present invention, the glass member 13 is sealed to the metallic connector member 12 in front of desired positions for the glass device inlets or outlets 150. The glass devices or reactors 100 can be micro reactors, mini reactors, or any other sized glass (borosilicate or other compositions) or ceramic vessels, fluidic systems, or titer plates or wells for biological or chemical processing that will all be referenced as micro reactors in this present invention. Hermeticity of the glass member 13 on the reactor 100 is achieved by using the glass-to-metal seal 14.

Glass-to-metal sealing is a common process. Generally, two configurations for glass-to-metal sealing exists - matched seals and compression or compressive seals. For matched seals, the glass and metal have similar coefficient of thermal expansion (CTE). Therefore, only small stresses are built up between the glass and metal parts.

Compressive seals fall into the second group. A compression seal is formed when a glass and metal have different CTEs. Specifically, the metal has a higher coefficient of thermal expansion than the glass and therefore shrinks in on the glass upon cooling. Thus, the glass piece is put under compression after cooling. Compression seals therefore require high precision machining and very clean and smooth surfaces to enable a perfect contact between the glass and metal.

The seal 14 of the present invention is based on a compressive sealing process. According to the teachings of the present invention, the seal assembly 10 is designed such that the glass member 13 softens enough to match the geometry of the metallic connector part or member 12. By proper selection of materials, the glass member 13 has a temperature coefficient of expansion suitably matched to the temperature coefficient expansion of the metallic connector member 12. The CTE for the glass and metallic parts should be adapted or otherwise selected for suitable matching. The glass/metal combination for CTE matched selection should have difference in CTE less than about 10x10-7/°C at the setting point of the compression seal between the metallic connector member 12 and the glass member 13.

To facilitate the metal-glass sealing interface, the metallic connector member 12 includes a receptacle portion 125 having a flange 126 surrounding the metal aperture 120 to form a large opening. The flange 126 plays a key part for the receptacle 125 because the flange 126 guides the glass member's introduction into the receptacle portion 125 by aligning the axis of the glass member 13 and the metallic connector 12. Moreover, the flange 126 prevents the glass member 13 from being cut while pushing the glass member 13 into the receptacle 125 through the metal aperture 120. If the flange 126 is not used, the into the receptacle 125 through the metal aperture 120. If the flange 126 is not used, the insertion of the glass member 13 can be difficult where the glass member 13 is easily cut by the thin receptacle edges. During the sealing process, the cut-glass member can have further breakage while cooling.

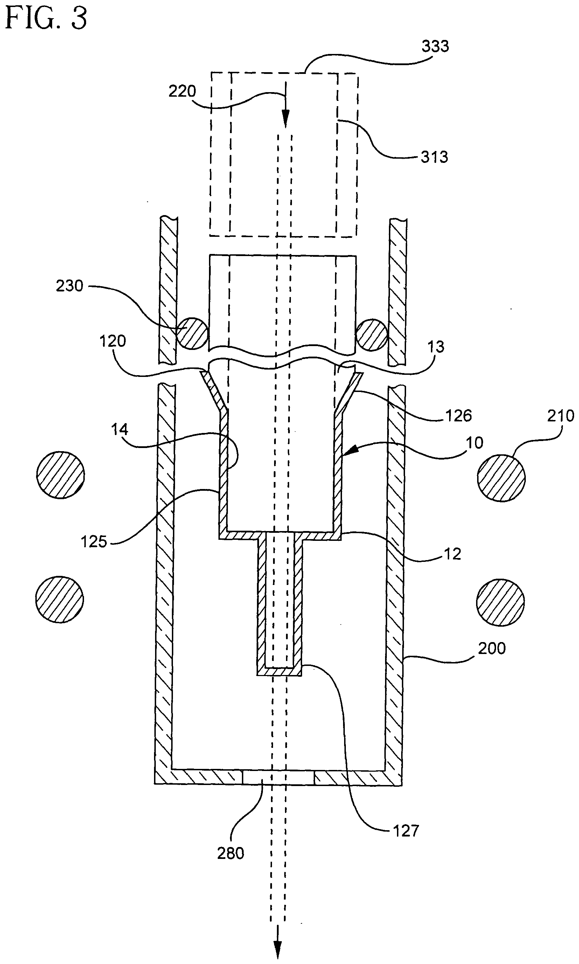

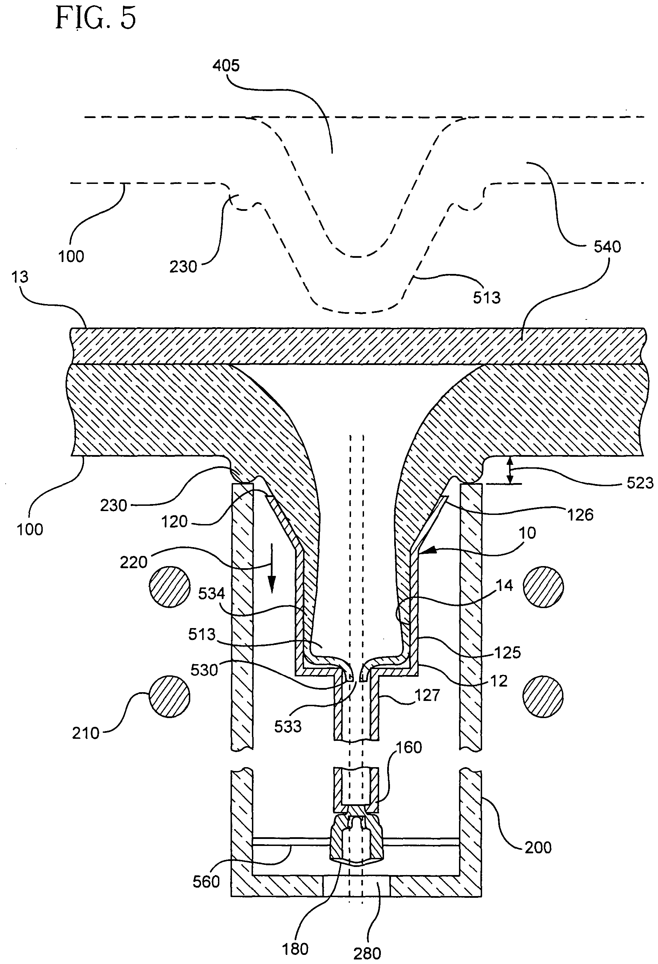

A stem portion 127 of the metallic connector member 12 has a small opening 128 on an opposed end of the large opening. Preferably, the material of the metallic connector member 12 is a Kovar® metal alloy for suitable CTE matching with borosilicate glass. The same or similarly sized receptacle portion 125 of about 1 cm in length for receptacle part of the metallic connector member 12 of FIGS. 1-2 can be used in FIGS. 3 and 5. However, the lengths of the thinner stem portion 127 do not have to be the same in FIGS. 3 and 5. In FIG. 5, the stem portion 127 will be longer for connecting to vaccum pumping during sealing. Moreover, the stem portion 127 should not be located in the magnetic field to prevent undesired coupling. Because of the need to connect to a pumping device, polymer o-ring or another type of mounting structure 560 is used to ensure gas tightness. Thus, if metallic parts are in the magnetic field of the inductive coils 210, the polymer o-ring 560 will heat and burn. Hence, the length of the stem portion 127 compared to the receptacle part depends on the assembly and application. Because of current machining limitations of long and thin stem, the length (represented by broken sections) and thinness of the stem portion 127 will depend on machining capabilities in FIG. 5.

Optionally, a gas fitting, another external connector, or a support structure 160 can be coupled with the stem portion 127 of the metallic connector member 12. Stainless steel, Kovar® alloy, or other metallic alloy could be employed with adapted glass to fabricate any suitable mounting structure for holding the hermetic porting assembly 10.

For feeding in or exiting a desired gas source, a Swagelok® connector, another suitable conventional gas connector or fitting 180 can be used for coupling with the stem portion 127 of the metallic connector member 12. Hence, a hermetic seal is formed by using a standard metal fitting 180 to couple with the internal part of the micro reactor 100 to the outside by means of the metal-glass compression seal 14 integrating the metal and glass body.

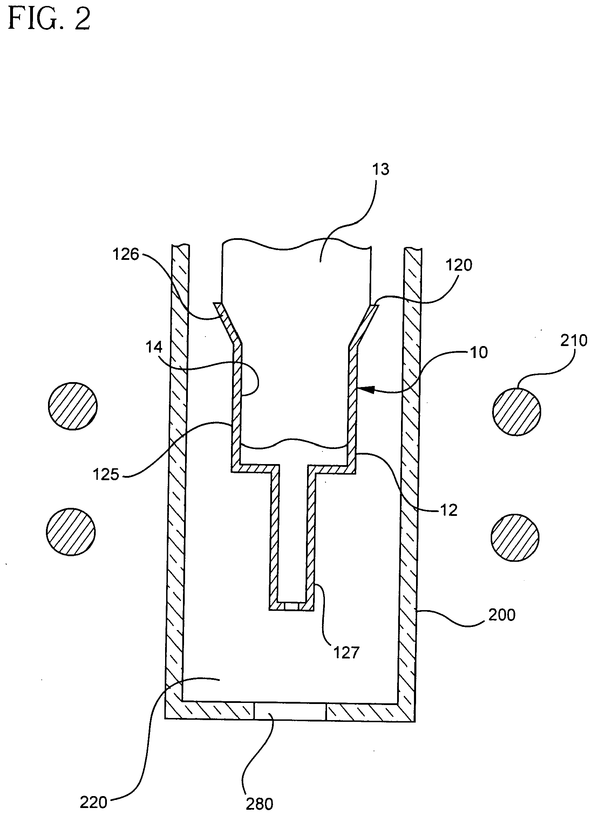

Referring to FIG. 2, the formation of the compressive or compression seal 14 of a partially internally glass lined metal feed-through assembly 10 of FIG. 1 is shown. The glass member 13 is positioned near the large opening or metallic aperture 120 of the metallic connector member 12.

Optionally, a chamber tube 200 encloses at least a portion of the glass member 13 received by the metallic connector member 12 for controlling gas flow through a chamber aperture 280. The chamber tube 200 can be made from silica or another transparent material having a softening point higher than the melting point temperature of the metallic alloy used for the metallic connector member 12. Any other material that does not couple with induction, remains rigid while heating and be transparent can be used for the chamber tube 200. The transparency of the chamber tube 200 is only needed to visually guide the introduction of the glass member 13 into the metal flange 126. Nevertheless, if the insertion of the glass member 13 can be automated with an accurate z-motion assembly apparatus, transparency is no longer a requirement for the chamber tube 200.

Having at least one open end, the transparent tube 200 acts as a chamber for gas flowing around the glass member 13. If the glass member 13 already has an aperture or some other type of an open-end, then the transparent tube 200 can have one-end closed. However, if the glass member 13 initially is inserted as a closed end to the metallic connector member 12, the transparent tube 200 can have both opposed ends opened. In this manner, with only side open, there will be an effective enclosure created for the argon, vacuum or other gases to stay inside the chamber or directed outside through the chamber. Preferably, a small hole or aperture 280 at the bottom of the transparent tube 200 below the coils 210 allow gas, such as argon in FIG. 3, or a vacuum suck-out in FIG. 5, to get out in order to create a chamber that is kept under a small desired gas pressure. The gas is introduced at the top of the transparent tube 200 through either an open end of the glass member 13 or an open end of the transparent tube 200. It is not important for the gas to be introduced inside of the glass member 13 because the gas just surrounds the assembly only to prevent oxidation of the external exposed portions of the metallic connector member 12.

Radio frequency (RF) inductive coils 210 are placed around the silica tube 200 for inductively heating around the metallic connector member 12 for internally heating together the metallic connector member 12 and the glass member 13 to the softening temperature of the glass member 13. The height of the metallic connector member 12 is taller than the height of the induction coils 210. The metallic connector member 12 should be positioned in an area where the magnetic field is homogeneous or otherwise uniform. Preferably, the metallic connector member 12 is positioned one centimeter below the last coil or one centimeter above the first coil.

From any suitable direction, a high pressure inert gas 220 having a fusion point below that of the metallic connector member and the glass member, is optionally blown into the silica tube 200 for preventing metal oxidation or collapse of the glass member 13 by immediately maintaining the glass shape and filling the softened portion of the glass member to be closely adhered to the metallic member 12 into one compression sealed body. During cooling of the metallic connector member 12, a relatively low compressive stress is imparted to the glass member 13 by the metallic connector member 12. The gas overpressure into the silica chamber 200 is only in millibars units, just sufficient to avoid atmospheric air penetration into chamber. Therefore, the goal for blowing gas into the silica chamber 200 is just to prevent oxidation. Overpressure is not used to maintain glass shape. However, argon gas blown into the glass member aperture or hole 333 itself has other advantages. One advantage is to cool (through flowing of cold gas) the internal sidewall of the glass aperture 333 to prevent rapid collapsing and overpressure helps also in maintaining shape during glass softening.

Hence, no machining of the glass member 13 to be compression sealed is initially required because the glass member 13 automatically conforms to the metallic connector member 12. Instead of sealing within a conventional more complicated furnace, glass heating of the present invention is provided by the heated metallic connecter member 12 itself within an electromagnetic field generated by induction coils 210 surrounding an optional chamber or silica tube 200. Positioning features 230 shown in FIGS. 3 and 5, such as O-rings external to the glass member 13 or detent features internal or otherwise integral with the glass member 13 are desired to prevent the glass member 13 from creeping in order to keep it straight.

Additionally, the dimensions of the components of the seal assembly 10 are carefully designed to avoid glass contact with other devices in order to prevent gluing as the glass is very hot. However, in accordance with the present invention, the only part that is heated is the seal area, defined by the placement of the inductive coils 210 around the metallic connector member 12. Thus, the glass member 13 is only softened in that part interfaced with the heated metallic connector member 12, reducing design complexity.

If an external detent feature is desired, the detent 230 can be one or more polymer o-ring positioned roughly about 10 cm above or below the metallic connector 12. The polymer o-ring is not heated because it is sufficiently far away from the heat generation.

Argon flow (overpressure) from the inert gas 220 is used to prevent collapsing of the inner part of the glass member 13 caused by softening while heating. Suitable noble gas, other than Argon, can also be used as the inert gas 220 in order to prevent metal oxidation.

Referring to FIGS. 3-4, the glass member 13 of FIGS. 1-2 is a capillary glass tube 313 fused to the glass aperture 404 of a glass substrate 403. The capillary glass tube 313 is made from a borosilicate glass and has an inner hole or aperture 333 for use as a feed-thru element to connect another glass to the metallic connector member 12.

If O-rings are used as the positioning or detent features 230, gas tightness or gas sealing is provided by the O-ring at an optional upper part of the silica or chamber tube 200. Additionally, the O-ring allows sliding of the glass member 13 in a straight line while the glass member 13 is pushed into the metal receptacle portion 125 of the metallic connector 12. The capillary tube 313 is pushed into the receptacle 125 until the capillary 313 touches the bottom of the receptacle portion 125. Preferably made from polymer, the o-ring 230 is positioned roughly about 10 cm above the metallic connector 12. In order to show such a relative distance, the chamber tube 200 and the capillary tube 313 are shown as cut-away sections. The polymer o-ring or other detent feature 230 is not heated because it is sufficiently far away from the inductive heating area defined by the coils 210.

Preferably, the material for the micro reactor glass substrate 403 is a CORNING 1737 glass having a CTE of 38 x 10⁻⁷/°C.

The metal to glass linkage between the glass micro reactor 100 and the metal connector frame or metallic mounting member 12 is insured by a short Pyrex capillary tube section 313 matching both the CTEs of the metallic connector member 12 and the glass substrate 403. Preferably, the material for the capillary glass tube 313 is a 7740 glass available from Corning having a CTE of 33 x 10⁻⁷/°C.

In order to match the CTEs of Pyrex, Corning code 1737, or other hard vacuum formed glass micro reactor parts for interconnection, a convenient metal alloy should be selected for use as the connector machining material for the metallic connector member 12. Kovar (or Dilver P1) available from Imphy, presenting a 51.10⁻⁷ C⁻¹ CTE up to 300°C and 62.10⁻⁷ C⁻¹ up to 500°C is a good candidate. Preferably, the material for the metallic connector is made from a Kovar® alloy having a CTE of 45 x 10⁻⁷/°C. The slightly higher CTE of the metallic connector member 12 will put the glass in light compression and not in a neutral or extended position. During any mechanical constraints applied during connector handling, such as flexion, compression, torsion, shear, etc., the light compression stress will reinforce the mechanical resistance of the glass-to-metal connection. Flexion is the force applied at the bottom of the sealed metallic connector 12 or assembly 10 when a force is applied at its top in a lateral direction. A light compression ensures a good contact between the glass member 13 and the metallic connector member 12 and thus assembly gas tightness. In fact, a light compression stress configuration minimizes any potential weakness in the seal.

The choice of the preferred materials was made upon their coefficients of thermal expansion. Nevertheless, other assembly materials with compatible CTEs could also be used for the application.

The glass-to-metal seal 14 between the capillary glass tube 313 and the Kovar® connector 12 is obtained by pushing one end of the capillary glass tube 313 into the metallic connector 12 at high temperature (820°C) under argon flow 220 to prevent oxidation of the metallic part 12.

While sealing between the capillary glass tube 313 and the metallic connector 12, no frit is used to generate the bond between the two pieces. However, glass frit could be used to bond two glass substrates to form the channels 403. Thus, the glass-to-metal seal is oxide free (decarburizing and pre-oxidation of the metal connection are not necessary).

The machined flange 126 on the metallic connector 12 helps to introduce and guide the capillary glass tube 313 because the outside diameter of the capillary glass tube 313 is just slightly larger than the internal diameter of the metallic part 12. The desired angle of flange to push capillary tube 313 inside the metallic connector 12 is in a range from about 15 degrees to 40 degrees. The internal diameter of the receptacle 125 portion should be about 100-250 µm smaller that the external diameter of the glass capillary 313 to ensure good fitting between parts. Preferably, the glass capillary tube 313 has a diameter of 8 mm and is made from Pyrex® glass. The capillary glass tube 313 is inserted and partially softened at 880°C by induction heating. Then, when the capillary glass tube 313 is pushed into the internal part of the hot metal connector 12 (heated by inductive RF up to the softening point temperature of the capillary glass tube 313), the wall of the capillary glass tube 313 is softened and a perfect interface 14 is created between the capillary glass tube 313 and the internal face of the metallic connector 12.

In order to prevent the softening of the internal part of the capillary glass tube 313, argon gas or another suitable inert gas 220 is introduced into the chamber of the silica tube 200 through the capillary glass tube 313 to ensure sufficient cooling. Thus, only the most external part of the capillary glass tube 313, in contact with the hot connector 12, is softened. Then, when the two parts are cooled down, a compressive force is generated by the outer metallic case 12 which has a higher expansion and gas tightness is provided.

Preferably, the wall thickness of the metallic connector 12 is very thin (< 300 µm) to insure that the compressive force generated by the CTE mismatch of materials do not generate too much mechanical stresses into the capillary glass tube 313 area located near the glass-to-metal seal 14 to form a desired compressive seal, also called a housekeeper seal.

Finally, a strong glass-to-metal seal 14 is obtained. The connection is heat-resistant and withstands high pressure because the internal diameter of the capillary glass tube 313 is very small (< 1 mm) and the wall thickness is very large (OD/ID > 8). In fact, the radial force generated on the internal wall of the capillary glass tube 313 by pressure in such a configuration is very weak. Such glass-to-metal transitions 14 were successfully tested up to 40 bars at room temperature. Thus, the finished hermetic porting assembly 10 can withstand temperatures over 120°C and up to about 600°C (7740 capillary glass tubes 313) and with pressures above 40 bars (for 8 mm diameter capillary glass tubes 313).

In applications where vacuumed formed holes are not available, drilled holes 404 may be acceptable on the glass reactor substrate 403. The feed-through capillary glass tube 313 extending from the glass-metal seal 14 provides a linkage for connecting the internal part of the glass micro reactor 100 to the outside. To form the connection of the finished seal 14 to the glass micro reactor substrate 403, input or output holes or apertures 404 can be formed by drilling, grinding, or other suitable process. For example, a tube protrusion can cut a 1 mm hole 404 into the glass substrate 403. With the hole 404 present, the unsealed end of the glass capillary tube 313 is polished and sealed onto the micro reactor glass substrate 403 by heat treatment. The glass-to-metal transition or seal 14 is positioned vertically onto the glass substrate 403 above the hole 404 drilled in the micro reactor plate 403 and heat treated at about 820°C for about 30 minutes. The sealed glass 313 and metal connector 12 can be put over the hole 404 for the glasses to be connected and pass through an 810°C thermal cycle where the Pyrex capillary glass tube section 313 is sealed over the Pyrex glass cover plate 403 of the micro reactor 100.

In order to prevent any deformation of the capillary glass tube by undesirable glass flowing during the heat treatment, the capillary glass tube 313 is guided into an optional drilled graphite cast 406. Several capillary glass tubes 313 can be sealed onto the micro reactor substrate 403 at the same time by using a cast with several holes. If the length of the glass capillary 313 is small enough (< 5mm) before sealing to the substrate 100, the drilled graphite cast 406 is no longer necessary. Even though the graphite cast 406 is shown it is not required because in the preferred embodiment, the capillary length is shorter than 5 mm. After annealing at 550°C, the capillary glass tubes 313 remain sealed onto the glass substrate 403 with its metallic connection 14 at the other end.

After glass sealing with the glass substrate 403, standard fittings, such as a Stainless steel Swagelok® fitting 180 can be used to connect the micro reactor inlets and outlets 150, as seen in FIG. 1, to other outside equipments (pump, mixer, etc.). Once connected, hot liquid and gas can flow through the capillary glass tube 313 under pressure into the micro reactor 100.

Hence, the low thermal expansion alloy (Kovar) metallic connector 12 can be made by connector frame machining for gathering or otherwise linking two main functional parts. Firstly, the inner diameter (8 mm) of the Pyrex capillary glass tube 313 is sealed onto the internal face of the metallic connector 12 by a 0.2mm thin web. A 7740 glass capillary already having a hole 313 can be used as the capillary tube 313 if commercially available, but one can always drill a hole 333 in a solid glass rod before sealing the drilled rod as the capillary tube 313 to the metallic connector 12. The web refers to the thin wall of the metal receptacle 125. Thus, the capillary glass tube 313 having the hole 333 is pushed into the metal receptacle 125 until the capillary tube 313 touches the bottom of the receptacle 125 (end of the receptacle cavity). A side-wall of the receptacle 125 having a length of at least about 3 to 5 mm is sufficient for contacting with the capillary tube 313 to ensure good sealing. Preferably, the softened capillary glass tube 313 (by deformation due to softening) covers only small part of the flange 126 or ideally, not at all.

Secondly, the diameter (3.17 mm) of the stem or neck portion 127 of the metallic connector 12 provides the suitable dimension for fitting with the Swagelock standard gas connector 180, as seen in FIG. 1.

If the capillary tube 313 is not suitably short enough, the insertion of the capillary tube section 313 and the mechanical resistance of the capillary tube 313 after sealing could be weakened. In some applications, drilling holes is not efficient for automatic high volume assembly and could cause further flaws. Careful dimensioning design should be optimized for the proper insertion of the capillary tube section 313 and to provide sufficient mechanical resistance of the capillary tube 313 after sealing. However, the initial length for the capillary tube 313 should not too short to facilitate assembly. Nevertheless, the length of the capillary tube 313 is not too critical because dicing, sawing or otherwise slicing at the correct length is possible after cooling of the sealed glass and metal body.

Referring to FIG. 5, the glass member 13 of FIGS. 1-2 is shown as a hollow glass protrusion portion 513 having an external surface 530 pulled through the metal aperture 120 into at least a portion of the stem or neck portion 127 to form the glass aperture 130.

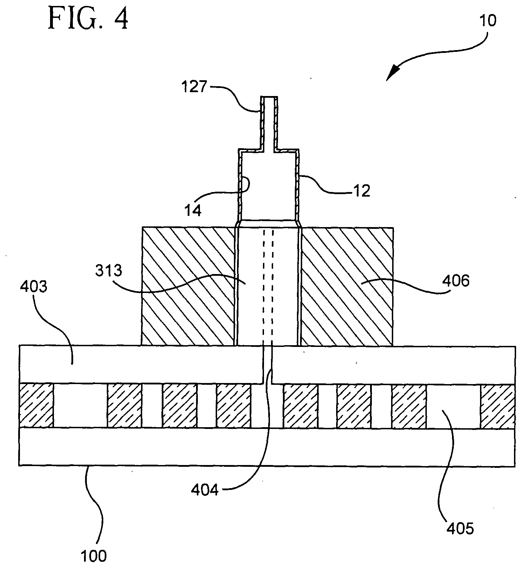

Instead of using pre-formed holes 404 of FIG. 4, pre-formed drops, bulbs, overhangs, wells, or hollow protrusions 513 can be created by micromolding or vacuum formed microcircuits as taught in commonly own patent application EP04291114.9 filed April 30, 2004. Such created glass protrusions 513 can form sections of channel, well, and other designed features 405 of the micro reactors 100. The vacuum formed technique avoids either holes drilling in the micro-reactor cover plate or in the vacuum formed part. In addition, the requirement of the Pyrex capillary glass tube section 313 of FIG. 4 is no longer needed in the preparation and sealing of the metallic connector frame 12 prior to final assembly.

Sections of vacuum formed, micromolded or otherwise formed shapes 513 provide a tapering or otherwise shape transformation from a massive plate base foundation 540 having a 2 mm thickness for example, within a possible range of 1-3 mm, to a thin bottom hollow protruded surface 530, preferably 0.4 mm thick, where most of the vacuum drawing was located.

The medium side walls 534 of the hollow protrusion 530, progressively ranging in a side-wall dimension of about 0.6 to 0.4mm will easily melt within the metal connector 12 using induction heating to a thinner thickness preferably less than 0.2mm for the protruded surface 530. Because the glass walls 534 are sufficiently thin, the inductive heating cycle duration is only about 5 to 10 seconds.

The thick base 540 of the micro reactor glass substrate will provide a strong foundation or base for the finished hermetic sealed port assembly 10. From a mechanical point of view, the glass 530 in light compression, will undergo stresses in flexion and torsion on a large fired polished 8 mm section of the micro reactor glass substrate 540 free from hole drilling's potential flaws.

Meanwhile, the thin bottom 533 of the hollow glass protrusion 513 will collapse under heating, creating a hole without any costly drilling process. Thus, no hole drilling is required between vacuum formation and connection assembly.

Thus, the different shaped sectional transformation or taper guaranty stress relief from the metal connection to the rigid glass substrate base 540. Preferably, the metallic connector body 12 is positioned around the hollow glass protrusion 513 up to a predetermined position. For example, a pre-formed molded, melted or otherwise formed stopper or detent feature 230, corresponding to the widest flare dimension of the metallic connector's flange controls the distance of the metallic connector 12 from the edge of the rigid glass substrate base at gap 523 of about 0.5 mm. The pre-formed glass detent feature 230 is not preferably not a stand-alone piece but formed with the starting protrusion 513 made previously by vacuum forming. The function of the glass detent portion 230 is to avoid direct contact of the flange 126 with the bottom of the micro reactor 100. Therefore, the glass detent 230 is shown being positioned into the flange 126.

The 523 gap of 0.5 mm is the distance between the flange 126 extremity and the base of the substrate 540. Induction heating of the metallic connector frame 12 then softens the glass protrusion 513.

Vacuum 580 optionally fed through or sucked out from the gas connector 180 is used to puncture the glass protrusion 513 in order to make the hole 130 of FIG. 1. During inductive heating, the process of vacuum sucking forces fillets or sticks of the thin glass bulb 530 onto neck or stem portion 127 of the metallic connector frame 12, making the bottom glass protrusion or bulb thinner and thinner and finally creates the communication hole or glass aperture 130. Under vaccum, the glass protrusion 513 will be sucked until its entrance into the stem portion 127 and then puncturing will occur.

Heating and vacuum sucking are automatically stopped when the communication hole 130 is detected by a change in vacuum level. Internal air flux applied through the bottom of the optional chamber tube 200 sucks or otherwise pulls out a punctured hole from the protrusion 513 to provide the fused glass-to-metal hermetic compression seal around a vacuumed puncture to form the glass aperture 130 of FIG. 1 under vacuum. The chamber tube 200 is optional because any other device that guarantees metal protection from oxidation can be used. For example, pre-coating the metallic connector 12 before inductive heating with a protective coating such as nickel or platinum (Ni, Pt) would guarantee metal protection from oxidation and Argon would no longer need to be used. A fitting or connector support 160 couples the stem portion 127 of the metallic connector 12 to the vacuum pump source. The vacuumed gas gently cools the soften glass 530 and also prevents the soften glass 530 from collapsing.

Moreover, in order to prevent any metal oxidation during the induction heating cycle, an argon flux is optionally provided around the metallic connector body 12, for example surrounded by the optional chamber tube 200 held or otherwise positioned by a positioning feature 560, such as a remote O-ring. The internal portions of the metallic connector member 12 and the glass member 13 (in this case, the glass protrusion 513) do not need gas protection because metal held under vacuum does not oxidize well.

Preferably, the metallic connector body 12 is held by a connector support 160 as seen in FIG. 1 in a Swagelock adaptation 180 (Standard 3.17 mm diameter) insuring a good vacuum connection. The optional chamber tube 200 enclosing the argon flux supply can slide along the Swagelock adaptation 160 as guided by optional one or more O-rings 560 placed remote from heat generation, in a room temperature area (not shown). The gap 523 from the top external surface of the silica tube 200 to the glass protrusion for sealing should be minimized to be about 0.5 mm, for example, for efficient argon protection.

Automatic robotic heating and assembly is possible for making such hermetic connections one at a time or simultaneously. Hence, this sealing technique is applicable to all microreactors 100 presenting at least one vacuum formed plate (hybrid micromolding). No additional joints and cooling devices are necessary. An easy, low cost and oxide-free glass-to-metal sealing method is therefore taught and used in making a hermetic porting assembly.

## Claims

1. A hermetic porting assembly for a glass or glass ceramic micro reactor, the assembly comprising:
a metallic connector (12) having a metal aperture, and
a glass member (13,313,513) having a glass aperture, the glass member positioned within the metal aperture, the metallic connector member having a higher coefficient of thermal expansion than the glass member;
**characterised in that** the metallic connector (12) is a metallic connector member (12);
wherein at least a portion of the glass member is held within the metallic aperture of the metallic member by a fused glass-to-metal hermetic compression seal.

2. The assembly of claim 1, wherein the metallic connector member comprises:
a receptacle portion (125) having a flange (126) surrounding the metal aperture to form a large opening; and
a stem portion (127) having a small opening on an opposed end of the large opening.

3. The assembly of claim 2, further comprising a standard gas fitting (180) for coupling with the stem portion of the metallic connector member.

4. The assembly of claim 2, further comprising a gas connector for coupling with the stem portion of the metallic connector member.

5. The assembly of claim 4, further comprising a vacuum source for coupling with the gas connector.

6. The assembly of any preceding claim, wherein the metallic connector member (12) is made from a metal alloy.

7. The assembly of any preceding claim, wherein the glass member comprises a capillary glass tube (313) fused to the glass aperture of a glass substrate.

8. The assembly of any preceding claim, wherein the glass member comprises a hollow glass protrusion portion (513) having an external surface pulled through the metal aperture to provide the fused glass-to-metal hermetic compression seal around a vacuumed puncture to form the glass aperture.

9. A method for compressively sealing a partially internally glass lined metal feed-through assembly, the method comprising the steps of:
providing a metallic connector member (12) having a flange surrounding a large opening and having a small opening on an opposed end of the large opening;
providing a glass member (13,313,513) having a temperature coefficient of expansion within 10x10⁻⁷ /°C of the temperature coefficient expansion of the metallic connector member at the setting point of the compression seal between said metallic connector member and said glass member;
positioning the glass member (13,313,513) sufficiently near the large opening of the metallic connector member;
inductively heating the metallic connector member (12) for internally heating together the metallic connector member and the glass member to the softening temperature of the glass member; and
controlling gas flow through the metallic connector member (12) and the glass member (13,313,513) while the glass member is closely adhered to the metallic member into one body, a relatively low compressive stress being imparted to the glass member by the metallic connector member during the cooling of the metallic connector member.

## Patentansprüche

1. Hermetische Portierungsvorrichtung für einen Glas- oder Glaskeramik-Mikroreaktor, wobei die Vorrichtung Folgendes umfasst:
einen metallischen Verbinder (12) mit einer Metallöffnung und
ein Glaselement (13,313,513) mit einer Blasöffnung, wobei das Glaselement innerhalb der Metallöffnung positioniert ist, wobei das metallische Verbindungselement einen höheren Wärmeausdehnungskoeffizienten hat als das Glaselement;
**dadurch gekennzeichnet, dass** der metallische Verbinder (12) ein metallisches Verbindungselement (12) ist;
wobei mindestens ein Teil des Glaselements innerhalb der metallischen Öffnung des metallischen Elements durch eine geschmolzene hermetische Glas-auf-Metall-Kompressionsdichtung gehalten wird.

2. Vorrichtung nach Anspruch 1, wobei das metallische Verbindungselement Folgendes umfasst:
einen Aufnahmeabschnitt (125) mit einem Flansch (126), der die Metallöffnung umgibt, um eine große Öffnung zu bilden; und
einen Schaftabschnitt (127) mit einer kleinen Öffnung an einem gegenüberliegenden Ende der großen Öffnung.

3. Vorrichtung nach Anspruch 2, ferner eine Standardgasarmatur (180) zum Verbinden mit dem Schaftabschnitt des metallischen Verbindungselements umfassend.

4. Vorrichtung nach Anspruch 2, ferner einen Gasanschluss zum Verbinden mit dem Schaftabschnitt des metallischen Verbindungselements umfassend.

5. Vorrichtung nach Anspruch 4, ferner eine Vakuumquelle zum Verbinden mit dem Gasanschluss umfassend.

6. Vorrichtung nach einem der vorstehenden Ansprüche, wobei das metallische Verbindungselement (12) aus einer Metalllegierung besteht.

7. Vorrichtung nach einem der vorstehenden Ansprüche, wobei das Glaselement ein Kapillarglasrohr (313) umfasst, das an die Glasöffnung eines Glassubstrates fusioniert ist.

8. Vorrichtung nach einem der vorstehenden Ansprüche, wobei das Glaselement einen hohlen Glasvorsprungsabschnitt (513) mit einer externen Oberfläche umfasst, die durch die Metallöffnung gezogen ist, um die geschmolzene hermetische Glas-auf-Metall-Kompressionsdichtung um eine vakuumierte Nadel bereitzustellen, um die Glasöffnung zu bilden.

9. Verfahren zum Verdichten durch Zusammendrücken einer teilweise intern emaillierten Metalldurchführungsvorrichtung, wobei das Verfahren folgende Schritte umfasst:
Bereitstellen eines metallischen Verbindungselements (12) mit einem Flansch, der eine große Öffnung umgibt und über eine kleine Öffnung auf einem gegenüberliegenden Ende der großen Öffnung verfügt; Bereitstellen eines Glaselements (13,313,513) mit einem Wärmeausdehnungskoeffizienten innerhalb von 10x10⁻⁷/°C des Wärmeausdehnungskoeffizienten des metallischen Verbindungselements am Erstarrungspunkt der Kompressionsdichtung zwischen dem metallischen Verbindungselement und dem Glaselement;
Positionieren des Glaselements (13,313,513) ausreichend nah an der großen Öffnung des metallischen Verbindungselements;
induktives Erwärmen des metallischen Verbindungselements (12) zum internen gemeinsamen Erwärmen des metallischen Verbindungselements und des Glaselements auf die Erweichungstemperatur des Glaselements; und
Steuern des Gasstroms durch das metallische Verbindungselement (12) und das Glaselement (13,313,513), während das Glaselement dicht an dem metallischen Element in einem Körper angehaftet ist, wobei durch das metallische Verbindungselement während des Abkühlens des metallischen Verbindungselements eine relativ geringe Druckbelastung auf das Glaselement ausgeübt wird.

## Revendications

1. Ensemble de portage hermétique pour un micro-réacteur de verre ou en vitrocéramique, l'ensemble comprenant :
un connecteur métallique (12) présentant une ouverture métallique, et
un élément de verre (13, 313, 513) comportant une ouverture de verre, l'élément de verre placé à l'intérieur de l'ouverture métallique, l'élément connecteur métallique ayant un coefficient de dilatation thermique supérieur à celui de l'élément de verre ;
**caractérisé en ce que** le connecteur métallique (12) est un élément connecteur métallique (12) ;
dans lequel au moins une partie de l'élément de verre est maintenue dans l'ouverture métallique de l'élément métallique par un joint de compression hermétique verre-métal fondu.

2. Ensemble selon la revendication 1, dans l'élément connecteur métallique comprend :
une partie réceptacle (125) ayant une bride (126) entourant l'ouverture métallique pour former une grande ouverture ; et
une partie tige (127) ayant une petite ouverture sur une extrémité opposée de la grande ouverture.

3. Ensemble selon la revendication 2, comprenant en outre un raccord de gaz standard (180) pour le couplage avec la partie tige de l'élément connecteur métallique.

4. Ensemble selon la revendication 2, comprenant en outre un connecteur de gaz pour le couplage avec la partie tige de l'élément connecteur métallique.

5. Ensemble selon la revendication 4, comprenant en outre une source de dépression pour le couplage avec le connecteur de gaz.

6. Ensemble selon l'une quelconque revendication précédente, dans lequel l'élément connecteur métallique (12) est réalisé en un alliage métallique.

7. Ensemble selon l'une quelconque revendication précédente, dans lequel l'élément de verre comprend un tube de verre capillaire (313) fondu à l'ouverture de verre d'un substrat de verre.

8. Ensemble selon l'une quelconque revendication précédente, dans lequel l'élément de verre comprend une partie en saillie de verre creuse (513) ayant une surface externe tirée à travers l'ouverture métallique pour fournir le joint de compression hermétique verre-métal fondu autour d'une perforation par dépression pour former l'ouverture de verre.

9. Procédé d'étanchéité par compression d'un ensemble traversant en métal partiellement revêtu de verre à l'intérieur, le procédé comprenant les étapes de :
fourniture d'un élément connecteur métallique (12) ayant une bride entourant une grande ouverture et ayant une petite ouverture sur une extrémité opposée de la grande ouverture ;
fourniture d'un élément de verre (13, 313, 513) ayant un coefficient de dilatation thermique de l'ordre de 10x10⁻⁷/°C du coefficient de dilatation thermique de l'élément connecteur métallique au point de réglage du joint d'étanchéité de compression entre ledit élément de connexion métallique et ledit élément de verre ;
positionnement de l'élément de verre (13, 313, 513) suffisamment près de la grande ouverture de l'élément connecteur métallique ;
chauffage inductif de élément connecteur métallique (12) pour chauffer intérieurement ensemble l'élément connecteur métallique et l'élément de verre à la température de ramollissement de l'élément de verre ; et
commande de l'écoulement de gaz à travers l'élément connecteur métallique (12) et l'élément de verre (13, 313, 513) tandis que l'élément de verre est étroitement collé à l'élément métallique en un seul corps, une contrainte de compression relativement faible étant appliquée à l'élément de verre par l'élément connecteur métallique pendant le refroidissement de l'élément connecteur métallique.
